# EUROPÄISCHE PATENTSCHRIFT

(11) **EP 3 961 034 B1**
(45) Veröffentlichungstag und Bekanntmachung des Hinweises auf die Patenterteilung: **23.04.2025**
(21) Anmeldenummer: 20193746.3
(22) Anmeldetag: 31.08.2020
(51) Int. Cl.: F04B 39/00, F04B 39/04, F04B 53/02, F04B 53/16, F16J 15/26, F04B 41/02

(54) **DROSSELRING**
THROTTLE RING
BAGUE D'ÉTRANGLEMENT

(43) Veröffentlichungstag der Anmeldung: 02.03.2022
(73) Patentinhaber: Burckhardt Compression AG, 8404 Winterthur (CH)
(72) Erfinder: Feistel, Norbert, 8548 Ellikon a.d. Thur (CH)
(74) Vertreter: Hepp Wenger Ryffel AG

(56) Entgegenhaltungen:
- EP-A1- 2 056 003
- EP-A2- 0 995 933
- WO-A1-2009/112478
- KR-B1- 101 898 141
- US-A1- 2004 227 301

## Beschreibung

Die vorliegende Erfindung betrifft das technische Gebiet der Kolbenkompressoren, insbesondere einen Drosselring, eine Kolbenstangendichtungsanordnung mit einem solchen Drosselring, sowie einen Kolbenkompressor mit einer solchen Kolbenstangendichtungsanordnung. Die Erfindung betrifft weiter ein Verfahren zum Verdichten von bei der Lagerung von verflüssigtem Erdgas anfallendem Boil-off Gas.

Zur Verdichtung von Fluiden wie Gasen oder Aerosolen werden üblicherweise Kompressoren verwendet. In einem Hubkolbenkompressor wird die mittels einer Antriebseinheit erzeugte Drehbewegung einer Kurbelwelle mit Hilfe von Pleuelstangen in eine hin- und hergehende Bewegung eines oder mehrerer Kolben umgewandelt, welche zum Komprimieren von angesaugtem Gas oder Aerosol in einer Verdichtereinheit genutzt wird. Zur Abdichtung des kurbelseitigen Arbeitsraumes werden an der sich bewegenden Kolbenstange Kolbenstangendichtsysteme, sogenannte Packungen, eingesetzt. Durch das Anliegen der Dichtelemente an der oszillierenden Kolbenstange unterliegen diese einem ständigen Verschleiss.

Ein charakteristisches Merkmal des in einem Hubkolbenkompressor ablaufenden Verdichtungsprozesses ist das Auftreten einer dynamischen Druckkomponente. Bei der dynamischen Druckkomponente handelt es sich um die während einer Kurbelwellenumdrehung zwischen dem Verdichtungsenddruck und dem Saugdruck der jeweiligen Verdichtungsstufe auftretende Druckdifferenz. Ab einem kritischen Wert führt diese dynamische Druckkomponente zu einem Fliessen der Dichtelemente und/oder zu hohem Verschleiss derselben. Insbesondere führt die dynamische Druckkomponente bei segmentierten Dichtelementen häufig zu Bruchversagen der assoziierten Schlauchfedern oder Spannringe, was das frühzeitige Versagen des Dichtsystems zur Folge haben kann.

Siehe zum Beispiel EP2056003 A1, in der ein aus mehreren Teilen bestehender Packungsring offenbart wird.

Zum Schutz der eigentlichen Dichtelemente vor diesen negativen Wirkungen des dynamischen Druckverlaufs sind aus dem Stand der Technik sogenannte Druckbrecher- oder Drosselringe bekannt, welche am Packungseintritt, d.h. verdichtungsraumseitig, eingesetzt werden und den dynamischen Druckverlauf von den eigentlichen Dichtelementen fernhalten sollen. Üblicherweise werden solche Drosselringe entweder als von Beginn an reibungsfreie Dichtelemente oder als reibungsfreie Dichtelemente mit einem geringen Einlaufverschleiss ausgeführt. Es hat sich jedoch gezeigt, dass die gängigen, berührungsfrei arbeitenden Drosselringe keinen nennenswerten Beitrag zur Abdichtung der dynamischen Druckkomponente leisten.

Beispielsweise weist der aus der CH 439 897 bekannte Drosselring den Nachteil auf, dass pulsierende Druckanteile nur ungenügend gedämpft werden. In der Folge belastet der Grossteil der dynamischen Druckkomponente die eigentlichen Dichtelemente und hierbei insbesondere das erste, unmittelbar zum Verdichtungsraum hin angeordnete Dichtelement. Ähnlich einer Kettenreaktion wandert die dynamische Druckkomponente mit fortschreitendem Verschleiss weiter in die Packung hinein, wodurch die nachfolgend angeordneten Dichtelemente bereits bei einer niedrigen bis mittleren Belastung rasch verschleissen und es zu einer erheblichen Verringerung der Standzeit des Kolbenstangendichtsystems kommt. Der Verschleiss der Dichtelemente wird durch sich im zu verdichtenden Fluid befindliche Fremdkörper noch verstärkt, da diese beispielsweise zwischen das Dichtelement und die sich bewegende Kolbenstange gelangen können und die Reibung somit noch erhöhen. Ebenso besteht die Gefahr, dass vom Bruchversagen der Dichtelemente oder deren Spannelemente herrührende Teile in den Verdich-tungsraum gelangen und dort kritische Komponenten, wie beispielsweise das Druckventil, beschädigen oder zumindest in ihrer Funktion beeinträchtigen.

Ausgehend von dem genannten Stand der Technik liegt der vorliegenden Erfindung die Aufgabe zugrunde, solche und weitere Nachteile des Standes der Technik zu beheben und insbesondere einen Drosselring der eingangs genannten Art anzugeben, der eine verbesserte Abdichtung des dynamischen Drucks leistet, einen besseren Schutz vor allenfalls vorhandenen Fremdkörpern gewährleistet, und wirtschaftlich herstellbar ist.

Der Erfindung liegt weiterhin die Aufgabe zugrunde, eine Kolbenstangendichtungsanordnung für einen trockenlaufenden Kompressor bereitzustellen, welcher in der Lage ist, Antriebssysteme von mit verdichtetem Erdgas betriebenen Schiffen und/oder Rückverflüssigungseinheiten zu versorgen, wobei das Erdgas vorzugsweise in Form von verflüssigtem Erdgas (Liquefied Natural Gas) oder Abdampfgas (Boil-off Gas) vorliegt.

Die Aufgabe wird insbesondere durch einen Drosselring, eine Kolbenstangendichtungsanordnung, einen Kompressor, und ein Verfahren aufweisend die Merkmale der unabhängigen Ansprüche gelöst. Vorteilhafte Ausgestaltungen und Weiterbildungen sind Gegenstand der abhängigen Ansprüche.

Die Aufgabe wird insbesondere gelöst mit einem Drosselring für einen Kolbenkompressor. Der erfindungsgemässe Drosselring umfasst eine axial verlaufende Ringachse, eine axiale Höhe, eine radial innen liegende Lauffläche und eine radial aussen liegende Umfangsfläche. Bei der Lauffläche handelt es sich um diejenige Fläche, welche die zentrale Ausnehmung des Drosselrings, innerhalb derer eine oszillierende Kolbenstange bewegbar ist, begrenzt. Der erfindungsgemässe Drosselring weist ferner eine obere Flanke und eine untere Flanke auf, wobei die obere Flanke im bestimmungsgemässen Gebrauch des Drosselrings dem Verdichtungsraum des Kolbenkompressors bzw. der Verdichtungsraumseite zugewandt ist. Die Lauffläche weist mindestens eine in Umlaufrichtung umlaufende Nut auf, welche durch mindestens eine radiale Bohrung bzw. einen radialen Kanal mit der radial aussen liegenden Umfangsfläche verbunden ist. Durch die mindestens eine radiale Bohrung stehen die radial innen liegende Lauffläche und die radial aussen liegende Umfangsfläche des Drosselrings in Fluidverbindung. Die radiale Bohrung weisen vorzugsweise einen kreisförmigen Querschnitt auf, kann jedoch auch andere Formen aufweisen, beispielsweise einen rechteckförmigen Querschnitt.

Ein solcher Drosselring weist den Vorteil auf, dass der dynamische Druckanteil derart abgedichtet wird, dass an den nachfolgenden Dichtelementen einer Kolbenstangendichtungsanordnung ein annähernd konstanter Druck anliegt, wie nachfolgend noch näher beschrieben wird. Der erfindungsgemässe Drosselring weist den weiteren Vorteil auf, dass er im Verdichtungsraum oder im zu verdichtenden Fluid vorhandene Fremdkörper von den Dichtelementen einer Kolbenstangendichtungsanordnung fernhält und somit den eingangs beschriebenen, kettenreaktionsartigen Verschleiss der Dichtelemente verhindert. Der Drosselring verhindert dabei sowohl den Übertritt von Abrieb oder gar Bruchstücken aus dem Dichtsystem in den Verdichtungsraum bzw. in das zu verdichtende Fluid, als auch den Eintrag von im zu verdichtenden Fluid vorliegenden Partikeln in das Kolbenstangendichtsystem. Anders ausgedrückt handelt es sich bei dem erfindungsgemässen Drosselring also um einen Schmutzfänger in beide Richtungen.

Der erfindungsgemässe Drosselring ist insbesondere für die trockenlaufende Verdichtung von Gasen mit niedrigem Molekulargewicht, wie beispielsweise Wasserstoff oder Methan, auf einen hohen Verdichtungsenddruck geeignet. Insbesondere sind durch die Verwendung des erfindungsgemässen Drosselrings in trockenlaufenden Kompressoren Druckerhöhungen von vorzugsweise bis zu 300 bar, und besonders bevorzugt von bis zum 1000 bar erzielbar, ohne dadurch die Standzeit der Kompressoren erheblich zu beeinträchtigen.

Eine trockenlaufende Verdichtung weist den Vorteil auf, dass das zu verdichtende Fluid nicht mit Schmierstoffen kontaminiert wird. Die Reinheit des verdichteten Fluids wird somit nicht negativ beeinträchtigt. Dies ist insbesondere für solche Anwendungen von grosser Bedeutung, bei denen ein Fluid in einen Speicher zurückgespeist wird, wie beispielsweise im Fall von bei der Lagerung oder dem Transport von Flüssigerdgas (LNG) anfallendem Boil-off-Gas, das wiederverflüssigt werden kann und anschliessend als Flüssigerdgas dem Speichergehälter zugeführt werden kann.

Der Drosselring ist als endloser Ring ausgebildet.

Ein endloser Ring, auch als ungeschnittener Ring bekannt, weist keinen Stoss auf, sondern ist in Umfangsrichtung ohne Unterbruch ausgestaltet.

Ein solcher endloser Ring ist mechanisch besonders belastbar und wirtschaftlich herstellbar.

Das während der Verdichtungsphase in die Kolbenstangendichtungsanordnung hineingeströmte Fluid befindet sich unter einem höheren Druck als der Saugdruck der betrachteten Verdichtungsstufe. Sinkt der Druck im Verdichtungsraum wieder in Richtung des Saugdrucks, so strömt das in der Kolbenstangendichtungsanordnung gespeicherte Fluid wieder in den Verdichtungsraum zurück.

Vorzugsweise weist der Drosselring mindestens einen in radialer Richtung verlaufenden Kanal auf, und vorzugsweise vier bis sechs solche in Umfangsrichtung beabstandete Kanäle. Besonders bevorzugt weist die obere Flanke des Drosselrings mindestens einen in radialer Richtung verlaufenden Kanal auf. Die radialen Kanäle weisen vorzugsweise einen rechteckförmigen Querschnitt auf.

Solche radial verlaufenden Kanäle werden auch als Druckausgleichsnuten oder Rückströmnuten bezeichnet.

Durch das Vorsehen von solchen radial verlaufenden Kanälen lässt sich die Rückströmung von in die Kolbenstangendichtungsanordnung hineingeströmtem Fluid erheblich verbessern, d.h. der Drosselring besitzt in dieser Phase nahezu keine Dichtwirkung und unterliegt daher auch keinem Verschleiss. Zudem wird durch die Verwendung von Rückströmnuten in der Packung und insbesondere am erfindungsgemässen Drosselring eine wesentlich stabilere Druckverteilung erreicht, da der dynamische Druckanteil während des Saughubs über die radialen Kanäle wieder in den Verdichtungsraum abgebaut werden kann. Ohne die Verwendung von Rückströmnuten kann der dynamische Druckanteil in Richtung des Packungsaustritts wandern und eine instabile Belastung der einzelnen Packungselemente verursachen. Diese instabile Druckverteilung führt zu Rotations- und Translationsbewegungen der Dichtelemente und in der Folge zu Schäden an den Dichtelementen sowie den Kammern.

Vorzugsweise weisen die radialen Bohrungen einen Durchmesser zwischen 0.5mm und 3 mm µm auf, vorzugsweise 0.75 mm bis 1.25 mm, und besonders bevorzugt 1 mm. Hierbei können die Bohrungen alle den gleichen Durchmesser oder auch verschiedene Durchmesser aufweisen.

Der angegebene Durchmesserbereich erlaubt eine optimale Druckentlastung bzw. Dämpfung der dynamischen Druckkomponente und verhindert gleichzeitig, dass Abrieb und/oder Bruchstücke aus der Packung durch die radialen Bohrungen hindurchtreten können. Der bevorzugte Durchmesserbereich bewirkt also einen grösstmöglichen Schutz des Verdichtungsraumes vor Fremdkörpern aus der Packung.

Vorzugsweise sind die von der jeweiligen umlaufenden Nut zur Umfangsfläche verlaufenden radialen Bohrungen bezogen auf die Ringachse achsensymmetrisch zueinander angeordnet.

Eine solche Anordnung der radialen Bohrungen bewirkt eine gleichmässige Druckentlastung und besonders hohe Standfestigkeit des Drosselrings.

Vorzugsweise verlaufen die umlaufenden Nuten im Wesentlichen parallel zur oberen und unteren Flanke des Drosselrings.

Solche parallel zur oberen und unteren Flanke des Drosselrings verlaufende Nuten können besonders leicht hergestellt werden, beispielsweise durch Fräsen.

Es ist erfindungsgemäss bevorzugt, dass die Lauffläche des Drosselrings mehrere umlaufende Nuten umfasst. Eine solche Lauffläche mit mehreren umlaufenden Nuten kann als Labyrinthdichtung angesehen werden, deren Funktionsprinzip darin besteht, dass das zu verdichtende Fluid beim Durchströmen mehrerer hintereinander geschalteter Engstellen (Drosselstellen) wiederholt Druckenergie in Wärme dissipiert und somit gedrosselt wird. Im vorliegenden Drosselring handelt es sich bei den Engstellen um die zwischen zwei benachbarten umlaufenden Nuten angeordneten Stege. Das zu verdichtende Fluid wird dabei aufgrund des Druckgefälles zunächst zur Drosselstelle hin beschleunigt, wodurch eine Umsetzung von Druckenergie in Geschwindigkeitsenergie stattfindet. In der nachfolgenden umlaufenden Nut löst sich der austretende Volumenstrom unter Umwandlung in Reibungswärme in kleine ungeordnete Wirbel auf. Dieser Vorgang wiederholt sich entsprechend der Anzahl der umlaufenden Nuten bis zum Ende des Drosselrings.

Vorzugsweise sind die umlaufenden Nuten in einem Bereich von 10% bis 90% bezogen auf die axiale Höhe des Drosselrings angeordnet. Besonders bevorzugt sind die umlaufenden Nuten in einem Bereich von 25% bis 75% bezogen auf die axiale Höhe des Drosselrings angeordnet.

Vorzugsweise weist die radiale Bohrung einen Durchmesser auf im Bereich von 50% bis 150% der Breite der umlaufenden Nut in axialer Richtung.

Die Anordnung der umlaufenden Nuten in dem angegebenen, bevorzugten Bereich der Lauffläche bewirkt den Vorteil, dass der so erhaltene Drosselring mechanisch besonders stabil ist. Insbesondere sind so die zwischen den axial zuäusserst angeordneten Nuten und den jeweiligen Flanken ausgebildeten Ringkanten mechanisch ausreichend stabil. Somit wird die Gefahr verringert, dass der Drosselring selbst zur Quelle von Bruchstücken wird.

Falls nicht anderweitig gekennzeichnet, bezieht sich der Begriff "axiale Höhe" im Zusammenhang mit der vorliegenden Beschreibung auf die axiale Höhe der radial innen liegenden Lauffläche. Für den Fall, dass die beiden Flanken des Drosselrings parallel zueinander beabstandet sind, entspricht die axiale Höhe der radial aussen liegenden Umfangsfläche folglich der axialen Höhe der radial innen liegenden Lauffläche.

Vorzugsweise weisen die umlaufenden Nuten jeweils eine Nuttiefe zwischen 0.5mm und 3mm auf. Zusätzlich oder alternativ dazu weisen die umlaufenden Nuten vorzugsweise eine Nutbreite zwischen 0.5mm und 3mm auf.

Durch diese bevorzugten Abmessungen der umlaufenden Nuten wird ermöglicht, dass Abrieb und/oder Bruchstücke aus der Packung besonders effektiv in den umlaufenden Nuten zurückgehalten werden kann.

Es ist ebenfalls erfindungsgemäss vorstellbar, dass die in Umlaufrichtung umlaufenden Nuten unterschiedliche Nutbreiten aufweisen.

Das Vorliegen von umlaufenden Nuten unterschiedlicher Breite bringt den Vorteil, dass dadurch besonders gut unterschiedlich grosser Abrieb und/oder unterschiedlich grosse Bruchstücke im Inneren der Nuten zurückgehalten werden können.

Vorzugsweise nimmt die Nutbreite in Richtung der oberen Flanke ab. Durch die Verschmälerung der jeweiligen umlaufenden Nuten in Richtung zur oberen Flanke des Drosselrings, also in Richtung Verdichtungsraum, wird ermöglicht, dass Abrieb und/oder Bruchstücke aus der Packung zwischen den umlaufenden Nuten wandern können, bis sie schliesslich in einer umlaufenden Nut mit einer jeweils passenden Grösse gefangen werden. Dadurch lässt sich die Schutzfunktion des Drosselrings erhöhen.

Alternativ dazu ist es erfindungsgemäss ebenfalls denkbar, dass die Nutbreite von beiden Flanken her in Richtung der halben axialen Höhe zunimmt. Dadurch wird der Vorteil erzielt, dass Abrieb und/oder Bruchstücke von beiden Seiten, d.h. verdichtungsraumseitig und antriebseitig, optimal im Inneren des Drosselrings zurückgehalten wird.

Zur Fertigung der erfindungsgemässen Drosselringe können modifizierte Hochtemperaturpolymere verwendet werden, deren Eigenschaften die an solche Drosselringe gestellten Anforderungen erfüllen, insbesondere hinsichtlich der mechanischen Stabilität und Verschleissfestigkeit.

Vorzugsweise besteht der Drosselring aus Kunststoff. Beispielsweise kann zur Herstellung der erfindungsgemässen Drosselringe Polytetrafluoroethylen (PTFE), Polyetheretherketon (PEEK), polyetherketon (PEK), Polyimid (PI), Polyphenylensulfid (PPS), Polybenzimidazol (PBI), Polyamidimid (PAI), Polyamid (PA), Polyexymethylen (POM), oder auch modifiziertes Epoxidharz verwendet werden.

Besonders bevorzugt besteht der Drosselring aus Polytetrafluoroethylen (PTFE).

Die eingesetzten Kunststoffe können mit Füllstoffen modifiziert sein. Solche mit Füllstoffen modifizierte Polymere werden auch als gefüllte Polymere bezeichnet.

Bei den zugesetzten Füllstoffen handelt es sich üblicherweise um Kohlenstoff, Graphit, Metalle, Keramik, Glaskugeln, Festschmierstoffe und/oder faserförmige Stoffe wie Kohlefasern, Aramidfasern, Glasfasern.

Durch solche Füllstoffe lassen sich z.B. die tribologischen Eigenschaften des verwendeten Kunststoffs verbessern, seine Temperaturbeständigkeit steigern und der Kaltfluss reduzieren.

Besonders bevorzugt besteht der Drosselring aus einem mit Festschmierstoffen modifizierten Kunststoff.

Der gesamte Drosselring kann aus ein und demselben Material bestehen. Ein solcher Drosselring weist den Vorteil auf, dass er besonders effizient hergestellt werden kann, beispielsweise durch ein Spritzgussverfahren.

Es ist erfindungsgemäss ebenfalls denkbar, dass die Lauffläche des Drosselrings mindestens im Bereich der mit einer Kolbenstange des Kolbenkompressors in Berührung bringbaren Oberfläche mit einer Verschleissschutzschicht versehen ist.

Beispielsweise kann es sich bei der Verschleissschutzschicht um eine Diamond-like Carbon Schicht (DLC) handeln.

Es ist ebenfalls denkbar, dass der Drosselring aus einem Metall und die Lauffläche aus einem trockenlauffähigen Material wie Kunststoff oder Keramik besteht.

Die Aufgabe wird weiter durch eine Kolbenstangendichtungsanordnung zum Abdichten einer längsbeweglich gelagerten, oszillierenden Kolbenstange eines Kolbenkompressors gelöst. Eine erfindungsgemässe Kolbenstangendichtungsanordnung umfasst mindestens einen Drosselring wie hierin beschrieben sowie mindestens ein dem Drosselring nachgelagertes Dichtelement.

Mit der Bezeichnung "Dichtelement" sind alle solchen Elemente gemeint, die den Durchtritt einer Kolbenstange in den Innenraum eines Zylinders abdichten, also insbesondere Dicht- und/oder Drosselringe.

Eine solche Kolbenstangendichtungsanordnung weist ein hohes Dämpfungsvermögen des dynamischen Druckverlaufs sowie eine hohe Standzeit auf.

Insbesondere ist die Kolbenstangendichtungsanordnung in einem trockenlaufenden Kolbenkompressor einsetzbar. Hieraus ergibt sich der Vorteil, dass das zu verdichtende Fluid nicht durch Schmierstoffe kontaminiert wird.

Vorzugsweise weist die Kolbenstangendichtungsanordnung wenigstens einen Kanal zur Zu- und Abfuhr von Kühlmittel auf.

Da ein Grossteil des an den Dichtelementen auftretenden Verschleisses auf Reibungswärme zurückführbar ist, lässt sich der Verschleiss durch Kühlung der Dichtelemente in der Packung reduzieren.

Die Aufgabe wird weiter mit einem trockenlaufenden Kolbenkompressor mit einer Kolbenstangendichtungsanordnung wie hierin beschrieben gelöst.

Kompressoren sind gewöhnlich einem langen Dauerbetrieb oder einem häufigen Ein- und Ausschalten ausgesetzt, was reibungsbedingt zu einer hohen Wärmeentwicklung führt. In der Vergangenheit wurden daher vornehmlich Kompressoren verwendet, die aufgrund einer Ölschmierung eine ausreichende Kühlwirkung sicherstellen. Bei der Ölschmierung besteht jedoch die Gefahr, dass das im Gehäuse der Verdichtereinheit befindliche Schmieröl über die Kolben-Zylinder-Paarung in das zu komprimierende Fluid eindringt, was letztlich zur Kontamination des verdichteten Fluids führen kann. Diese Gefahr besteht bei dem hier beschriebenen trockenlaufenden Kolbenkompressor nicht.

Die Aufgabe wird ferner durch ein Verfahren zum Verdichten von Boil-off-Gas gelöst, welches bei der Lagerung von verflüssigtem Erdgas (LNG) anfällt. Das erfindungsgemässe Verfahren umfasst das Bereitstellen zumindest eines erfindungsgemässen trockenlaufenden Kolbenkompressors, die ein- oder mehrstufige Verdichtung des zu verdichtenden Boil-off-Gases, sowie die zumindest teilweise Versorgung eines Vielstoffmotors mit dem verdichteten Boil-off-Gas als Treibstoff, wobei die durch die ein- oder mehrstufige Verdichtung erzielte Druckerhöhung wenigstens 200 bar, vorzugsweise wenigstens 250 bar beträgt. Alternativ oder zusätzlich zur Versorgung eines Vielstoffmotors mit dem verdichteten Boil-off-Gas als Treibstoff kann das erfindungsgemässe Verfahren die Rückverflüssigung von Boil-off-Gas enthalten.

Der Einsatz eines Drosselrings in einem Kompressor wie hierin beschreiben im erfindungsgemässen Verfahren bringt den Vorteil, dass der Kompressor aufgrund des erfindungsgemässen Drosselrings selbst bei einer Druckerhöhung von 300 bar ohne den Einsatz von Schmierstoffen betrieben werden kann und gleichzeitig sehr hohe Standzeiten in der Grössenordnung von 4000 Betriebsstunden erzielt werden. Zum einen kann dadurch das zu verdichtende Boil-off-Gas derart stark verdichtet werden, dass ein zum Betrieb mit Gas ausgebildeter Vielstoffmotor damit betrieben werden kann. Zum anderen wird das Boil-off-Gas bei der Rückverflüssigung nicht durch Schmierstoffe kontaminiert.

Das erfindungsgemässe Verfahren eignet sich bevorzugt auf einem mit Flüssigerdgas betreibbaren Schiff, welches einen Dual-Fuel-Schiffsmotor umfasst.

Verschiedene Ausführungsformen der Erfindung werden nachfolgend anhand von Zeichnungen beschrieben, wobei gleiche oder entsprechende Elemente mit gleichen Bezugszeichen versehen sind.

Es zeigen:
- Fig. 1: Einen erfindungsgemässen Drosselring;
- Fig. 2a: eine Draufsicht auf ein erstes Ausführungsbeispiel eines Drosselrings;
- Fig. 2b: einen Schnitt durch Figur 2a entlang der Linie A-A;
- Fig. 2c: einen Schnitt durch Figur 2a entlang der Linie B-B;
- Fig. 3a: eine Draufsicht auf eine Packungspatrone;
- Fig. 3b: einen Schnitt durch Figur 3a entlang der Linie C-C;
- Fig. 3c: einen Schnitt durch Figur 3a entlang der Linie D-D.

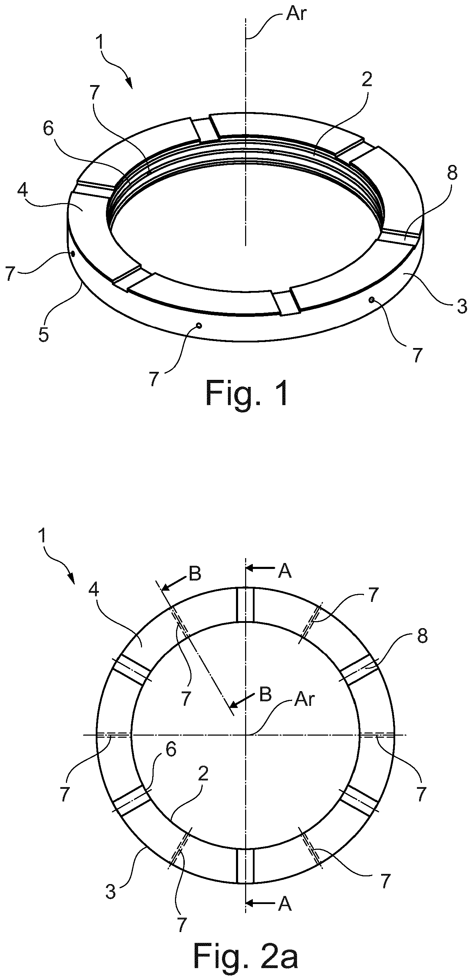

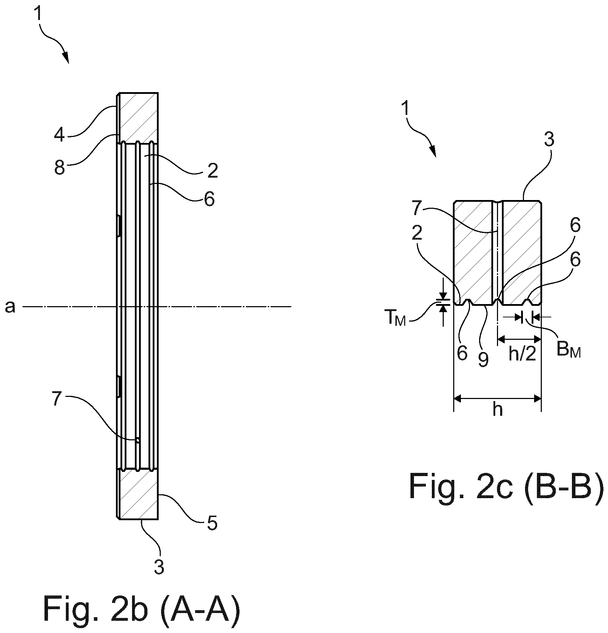

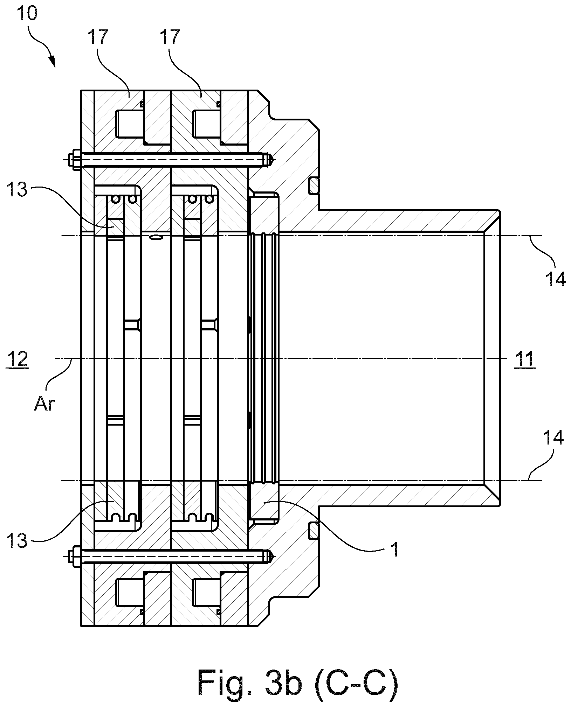

Fig. 1 zeigt in einer perspektivischen Ansicht einen Drosselring 1 für einen Kolbenkompressor. Der Drosselring 1 weist eine in axial Richtung verlaufende Ringachse Ar auf, und weist in Achsrichtung eine Ausnehmung mit einer radial innen liegenden Lauffläche 2 auf, entlang derer eine Kolbenstange 14 (in Fig. 3b andeutungsweise dargestellt) bewegbar ist. Der Durchmesser der axialen Ausnehmung ist derart dimensioniert, dass der Drosselring 1 die Kolbenstange vollständig umschliessen kann, wobei die Oberfläche der sich bewegenden Kolbenstange nicht oder kaum berührt wird. Beispielsweise beträgt das Axialspiel des Drosselrings 1 zwischen 0.1 und 0.25 mm. Dadurch wird sichergestellt, dass im verwendungsgemässen Gebrauch des Drosselrings 1 keine oder nur eine geringe Reibungswärme entsteht. Die Lauffläche 2 weist im gezeigten Beispiel drei in Richtung der Ringachse Ar gegenseitig beabstandete Nuten 6 auf, welche in Umlaufrichtung verlaufen und endlos ausgebildet sind. Im dargestellten Beispiel ist die mittlere der drei Nuten 6 durch sechs radiale Bohrungen 7 mit der radial aussen liegenden Umlauffläche 3 verbunden, wie im in Fig. 2c gezeigten Querschnitt noch detaillierter dargestellt ist. Der Drosselring 1 weist ferner eine obere Flanke 4 und eine dazu gegenüberliegend angeordnete untere Flanke 5 auf. Die obere Flanke 4 weist in dem dargestellten Beispiel sechs in radialer Richtung verlaufende Kanäle 8 mit einem reckteckförmigen Querschnitt auf. Selbstverständlich ist es ebenfalls denkbar, dass die radialen Kanäle 8 eine anders ausgebildete Querschnittsform aufweisen.

Fig. 2a zeigt den Drosselring 1 aus Fig. 1 in einer Draufsicht auf die obere Flanke 4. Die radial innen liegende Lauffläche 2 und die radial aussen liegende Umfangsfläche 3 verlaufen konzentrisch zueinander. Im vorliegenden Ausführungsbeispiel sind die radialen Bohrungen 7 und auch die radialen Kanäle 8 bezogen auf die Ringachse Ar achsensymmetrisch zueinander angeordnet und in Umfangsrichtung gegenseitig gleichmässig beabstandet. In Umfangsrichtung könnten beispielweise einer, zwei, vier, sechs oder acht radiale Bohrungen 7 gegenseitig beabstandet, vorzugsweise gegenseitig gleichmässig beabstandet angeordnet sein.

Fig. 2b zeigt einen Radialschnitt durch das in Fig. 2a gezeigte Ausführungsbeispiel entlang der Linie A-A. Der Ringkörper des Drosselrings 1 kann, wie im vorliegenden Ausführungsbeispiel, rechteckig ausgestaltet sein. Die drei umlaufenden Nuten 6 verlaufen im Wesentlichen parallel zu den beiden Flanken 4 und 5 des Drosselrings 1. Im vorlaufenden Ausführungsbeispiel weisen die drei umlaufenden Nuten 6 im Wesentlichen gleiche Nutbreiten und Nuttiefen auf. Selbstverständlich wäre es auch möglich, dass die umlaufenden Nuten 6 voneinander verschiedene Nutbreiten und/oder Nuttiefen aufweisen. Ebenso wäre es beispielsweise möglich, dass zwei oder alle umlaufenden Nuten 6 eine oder mehrere radiale Bohrungen 7 aufweisen, über welche die jeweiligen Nuten 6 mit der radial aussen liegenden Umlauffläche 3 in Fluidverbindung stehen.

Fig. 2c zeigt einen Schnitt entlang der Linie B-B gemäss Fig. 2a. Der Ringkörper des Drosselrings 1 weist in axialer Richtung Ar eine Höhe h auf. Gezeigt ist eine radiale Bohrung 7, welche von der radial aussen liegenden Umfangsfläche 3 in der mittleren der drei umlaufenden Nuten 6 mündet und die radial innen liegende Lauffläche 2 mit der radial aussen liegenden Umfangsfläche 3 verbindet. Die mittlere der drei umlaufenden Nuten 6 ist auf halber axialer Höhe h/2 des Drosselrings 1 angeordnet. Die jeweils zwischen zwei umlaufenden Nuten angeordneten Stege 9 stellen in Verbindung mit einer in der axialen Ausnehmung des Drosselrings 1 hin- und herlaufenden Kolbenstange (in Fig. 3b gezeigt) Drosselstellen dar.

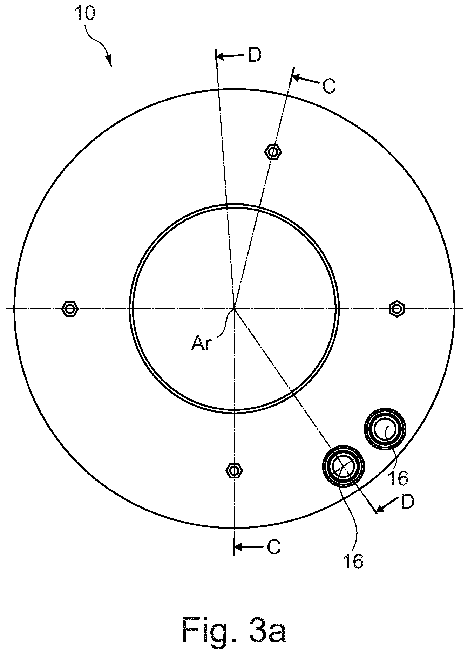

Fig. 3a zeigt eine Draufsicht auf eine Kolbenstangendichtungsanordnung 10 mit zwei Kühlkanälen 16, einem Zuführkanal sowie einem Abführkanal für das Kühlmittel. Die Kolbenstangendichtungsanordnung 10 umfasst im vorliegenden Ausführungsbeispiel zwei Dichtelemente 13 und einen Drosselring 1, wie in den nachfolgenden Zeichnungen noch näher erläutert wird.

Fig. 3b zeigt einen Axialschnitt durch die Kolbenstangendichtungsanordnung 10 gemäss der Linie C-C in Fig. 3a, wobei sich im eingebauten Zustand auf der Seite 12 der Kolbenstangenantrieb und auf Seite 11 der Verdichtungsraum befindet. Die Packung ist als Trockenlaufdichtungsanordnung ausgebildet und umfasst in dem vorliegenden Ausführungsbeispiel zwei in Verlaufsrichtung der Kolbenstange 14 hintereinander angeordnete Kammerringe 17 mit darin angeordneten Dichtelementen 13. Der Drosselring 1 ist verdichtungsraumseitig benachbart zu den Dichtelementen 13 angeordnet.

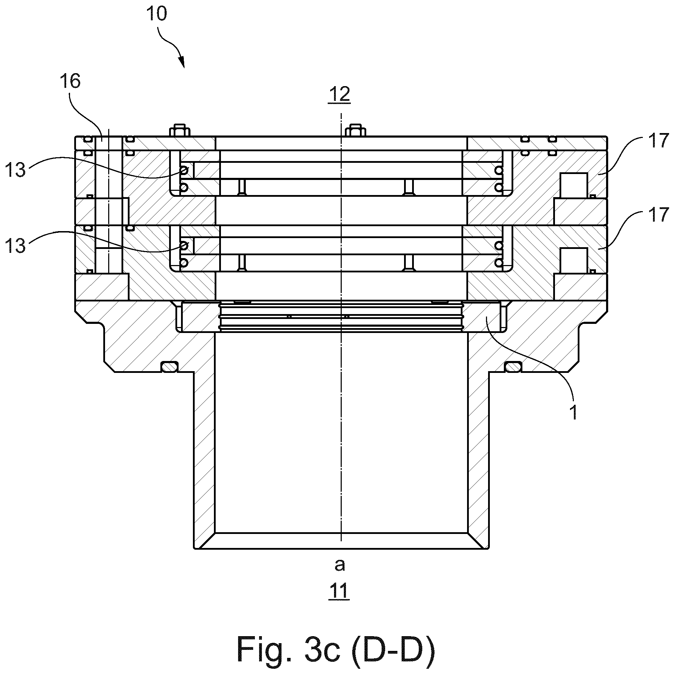

Fig. 3c zeigt einen Axialschnitt durch die Kolbenstangendichtungsanordnung 10 gemäss der Linie D-D in Fig. 3a, welche durch den Schmierkanal 15 sowie einen der Kühlkanäle 16 verläuft.

In einer vorteilhaften Ausgestaltung ist der vorhin beschriebene Drosselring 1 derart ausgestaltet, dass jede der umlaufenden Nuten 6 an der radial innen liegenden Lauffläche 2 durch zumindest eine radiale Bohrung 7, und vorzugsweise zwei, vier sechs oder acht Bohrungen 7, mit der radial aussen liegenden Umfangsfläche 3 verbunden ist.

In einer vorteilhaften Ausgestaltung ist der vorhin beschriebene Drosselring derart ausgestaltet, dass die radial innen liegende Lauffläche 2 des Drosselrings aus einem Material mit grösserer Härte als die der Flanken besteht.

In einer vorteilhaften Ausgestaltung ist der vorhin beschriebene Drosselring derart ausgestaltet, dass die umlaufenden Nuten 6 in Richtung der Ringachse Ar in einer Distanz von 0.5mm bis 5mm, vorzugsweise von 1mm bis 3mm, voneinander beabstandet sind.

## Patentansprüche

1. Drosselring (1) für einen Kolbenkompressor, mit einer axial verlaufenden Ringachse (Ar), einer axialen Höhe (h), einer radial innen liegenden Lauffläche (2) und einer radial aussen liegenden Umfangsfläche (3), sowie einer oberen Flanke (4) und einer unteren Flanke (5), wobei die obere Flanke (4) im bestimmungsgemässen Gebrauch des Drosselrings (1) dem Verdichtungsraum (11) des Kolbenkompressors zugewandt ist, wobei die Lauffläche (2) mindestens eine in Umlaufrichtung umlaufende Nut (6) aufweist, welche durch mindestens eine radiale Bohrung (7) mit der radial aussen liegenden Umfangsfläche (3) verbunden ist, und wobei der Drosselring (1) als endloser Ring ausgebildet ist.

2. Drosselring (1) nach Anspruch 1, wobei die obere Flanke (4) des Drosselrings (1) mindestens einen in radiale Richtung verlaufenden Kanal (8) aufweist.

3. Drosselring (1) nach einem der vorhergehenden Ansprüche, wobei die radialen Bohrungen (7) einen Durchmesser im Bereich zwischen 0.5mm und 3 mm auf, vorzugsweise 0.75 mm bis 1.25 mm, und besonders bevorzugt 1 mm.

4. Drosselring (1) nach einem der vorhergehenden Ansprüche, wobei die von der jeweiligen umlaufenden Nut (6) zur Umfangsfläche (3) verlaufenden radialen Bohrungen (7) bezogen auf die Ringachse (Ar) achsensymmetrisch zueinander angeordnet sind.

5. Drosselring (1) nach einem der vorhergehenden Ansprüche, wobei die umlaufenden Nuten (6) im Wesentlichen parallel zur oberen Flanke (4) und unteren Flanke (5) des Drosselrings (1) verlaufen.

6. Drosselring (1) nach einem der vorhergehenden Ansprüche, wobei die umlaufenden Nuten (6) in einem Bereich von 10% bis 90%, bevorzugt 25% bis 75%, bezogen auf die axiale Höhe (h) des Drosselrings (1) angeordnet sind.

7. Drosselring (1) nach einem der vorhergehenden Ansprüche, wobei die umlaufenden Nuten (6) jeweils eine Nuttiefe (Tn) zwischen 0.5mm und 3mm und/oder eine Nutbreite (Bn) zwischen 0.5mm und 3 mm aufweisen.

8. Drosselring (1) nach einem der Ansprüche 1 bis 6, wobei die umlaufenden Nuten (6) unterschiedliche Nutbreiten (Bn) aufweisen.

9. Drosselring (1) nach Anspruch 8, wobei die Nutbreite (Bn) vorzugsweise in Richtung der oberen Flanke (4) abnimmt oder von beiden Flanken (4, 5) her in Richtung der halben axialen Höhe (h/2) zunimmt.

10. Drosselring (1) nach einem der vorhergehenden Ansprüche, wobei der Drosselring (1) aus Kunststoff, insbesondere aus Polytetrafluorethylen, besteht.

11. Drosselring (1) nach Anspruch 10, wobei der Drosselring (1) aus einem mit Festschmierstoffen modifizierten Kunststoff besteht.

12. Drosselring (1) nach einem der vorhergehenden Ansprüche, wobei die Lauffläche (2) mindestens im Bereich der mit einer Kolbenstange (14) des Kolbenkompressors in Berührung bringbaren Oberfläche (9) mit einer Verschleissschutzschicht, insbesondere mit einer Diamond-like Carbon Schicht, versehen ist.

13. Kolbenstangendichtungsanordnung (10) zum Abdichten einer längsbeweglich gelagerten oszillierenden Kolbenstange (14) eines Kolbenkompressors, insbesondere eines trockenlaufenden Kolbenkompressors, wobei die Kolbenstangendichtungsanordnung (10) mindestens einen Drosselring (1) nach einem der Ansprüche 1 bis 12 sowie mindestens ein dem Drosselring nachgelagertes Dichtelement (13) umfasst.

14. Trockenlaufender Kolbenkompressor umfassend eine Kolbenstangendichtungsanordnung (10) nach Anspruch 13.

15. Verfahren zum Verdichten von bei der Lagerung von verflüssigtem Erdgas (LNG) anfallendem Boil-off-Gas, insbesondere auf einem mit LNG antreibbaren Schiff, das Verfahren umfassend die Schritte:
- Bereitstellen zumindest eines trockenlaufenden Kolbenkompressors nach Anspruch 14;
- ein- oder mehrstufige Verdichtung des Boil-off-Gases;
- zumindest teilweise Versorgung eines Vielstoffmotors, insbesondere eines Dual-Fuel-Schiffsmotors, mit dem verdichteten Boil-off-Gas als Treibstoff und/oder zumindest teilweise Rückverflüssigung des Boil-off-Gases;
wobei die durch die ein- oder mehrstufige Verdichtung erzielte Druckerhöhung wenigstens 200 bar, vorzugsweise wenigstens 250 bar, beträgt.

## Claims

1. Throttle ring (1) for a piston compressor, having an axially extending ring axis (Ar), an axial height (h), a radially inner running surface (2) and a radially outer circumferential surface (3), as well as an upper flank (4) and a lower flank (5), wherein the upper flank (4) faces the compression chamber (11) of the piston compressor when the throttle ring (1) is used as intended, wherein the running surface (2) has at least one circumferential groove (6) in the circumferential direction, which is connected to the radially outer circumferential surface (3) by at least one radial bore (7), and wherein the throttle ring (1) is designed as an endless ring.

2. Throttle ring (1) according to claim 1, wherein the upper flank (4) of the throttle ring (1) has at least one channel (8) extending in the radial direction.

3. Throttle ring (1) according to one of the preceding claims, wherein the radial bores (7) have a diameter in the range between 0.5 mm and 3 mm, preferably 0.75 mm to 1.25 mm, and particularly preferably 1 mm.

4. Throttle ring (1) according to one of the preceding claims, wherein the radial bores (7) extending from the respective circumferential groove (6) to the circumferential surface (3) are arranged axially symmetrically to one another with respect to the ring axis (Ar).

5. Throttle ring (1) according to one of the preceding claims, wherein the circumferential grooves (6) run essentially parallel to the upper flank (4) and lower flank (5) of the throttle ring (1).

6. Throttle ring (1) according to one of the preceding claims, wherein the circumferential grooves (6) are arranged in a range of 10% to 90%, preferably 25% to 75%, relative to the axial height (h) of the throttle ring (1).

7. Throttle ring (1) according to one of the preceding claims, wherein the circumferential grooves (6) each have a groove depth (Tn) between 0.5 mm and 3 mm and/or a groove width (Bn) between 0.5 mm and 3 mm.

8. Throttle ring (1) according to one of claims 1 to 6,
wherein the circumferential grooves (6) have different groove widths (Bn).

9. Throttle ring (1) according to claim 8, wherein the groove width (Bn) preferably decreases in the direction to the upper flank (4) or increases from both flanks (4, 5) in the direction to half the axial height (h/2).

10. Throttle ring (1) according to one of the preceding claims, wherein the throttle ring (1) is made of plastic, in particular polytetrafluoroethylene.

11. Throttle ring (1) according to claim 10, wherein the throttle ring (1) consists of a plastic modified with solid lubricants.

12. Throttle ring (1) according to one of the preceding claims, wherein the running surface (2) is provided with a wear protection layer, in particular with a diamond-like carbon layer, at least in the region of the surface (9) which can be brought into contact with a piston rod (14) of the piston compressor.

13. Piston rod seal arrangement (10) for sealing a longitudinally movably mounted oscillating piston rod (14) of a piston compressor, in particular a dry-running piston compressor, wherein the piston rod seal arrangement (10) comprises at least one throttle ring (1) according to one of claims 1 to 12 and at least one sealing element (13) arranged downstream of the throttle ring.

14. A dry-running reciprocating compressor comprising a piston rod seal arrangement (10) according to claim 13.

15. Method for compressing boil-off gas generated during the storage of liquefied natural gas (LNG), in particular on a ship which can be propelled with LNG, the method comprising the steps of:
- Providing at least one dry-running piston compressor according to claim 14;
- Single or multi-stage compression of the boil-off gas;
- at least partial supply of a multi-fuel engine, in particular a dual-fuel marine engine, with the compressed boil-off gas as fuel and/or at least partial reliquefaction of the boil-off gas;
wherein the pressure increase achieved by the single-stage or multi-stage compression is at least 200 bar, preferably at least 250 bar.

## Revendications

1. Bague d'étranglement (1) pour un compresseur à piston, avec un axe de bague (Ar) s'étendant axialement, une hauteur axiale (h), une surface de roulement (2) située radialement à l'intérieur et une surface périphérique (3) située radialement à l'extérieur, ainsi qu'un flanc supérieur (4) et un flanc inférieur (5), le flanc supérieur (4) étant tourné vers la chambre de compression (11) du compresseur à piston lors de l'utilisation conforme de la bague d'étranglement (1), la surface de roulement (2) présentant au moins une rainure (6) périphérique dans le sens de rotation, qui est reliée par au moins un alésage radial (7) à la surface périphérique (3) située radialement à l'extérieur, et la bague d'étranglement (1) étant conçue comme une bague sans fin.

2. Bague d'étranglement (1) selon la revendication 1, dans laquelle le flanc supérieur (4) de la bague d'étranglement (1) présente au moins un canal (8) s'étendant dans la direction radiale.

3. Bague d'étranglement (1) selon l'une des revendications précédentes, dans laquelle les alésages radiaux (7) ont un diamètre compris entre 0,5 mm et 3 mm, de préférence entre 0,75 mm et 1,25 mm, et plus préférentiellement 1 mm.

4. Bague d'étranglement (1) selon l'une des revendications précédentes, dans laquelle les alésages radiaux (7) s'étendant de la rainure périphérique respective (6) à la surface périphérique (3) sont disposés de manière axisymétrique les uns par rapport aux autres par rapport à l'axe de la bague (Ar).

5. Bague d'étranglement (1) selon l'une des revendications précédentes, dans laquelle les rainures périphériques (6) sont sensiblement parallèles au flanc supérieur (4) et au flanc inférieur (5) de la bague d'étranglement (1).

6. Bague d'étranglement (1) selon l'une des revendications précédentes, dans laquelle les rainures périphériques (6) sont disposées dans une plage de 10% à 90%, de préférence de 25% à 75%, par rapport à la hauteur axiale (h) de la bague d'étranglement (1).

7. Bague d'étranglement (1) selon l'une des revendications précédentes, dans laquelle les rainures périphériques (6) présentent chacune une profondeur de rainure (Tn) comprise entre 0,5 mm et 3 mm et/ou une largeur de rainure (Bn) comprise entre 0,5 mm et 3 mm.

8. Bague d'étranglement (1) selon l'une des revendications 1 à 6, dans laquelle les rainures périphériques (6) présentent des largeurs de rainure (Bn) différentes.

9. Bague d'étranglement (1) selon la revendication 8, dans laquelle la largeur de rainure (Bn) diminue de préférence en direction du flanc supérieur (4) ou augmente à partir des deux flancs (4, 5) en direction de la moitié de la hauteur axiale (h/2).

10. Bague d'étranglement (1) selon l'une des revendications précédentes, dans laquelle la bague d'étranglement (1) est réalisée en matière plastique, notamment en polytétrafluo-roéthylène.

11. Bague d'étranglement (1) selon la revendication 10, dans laquelle la bague d'étranglement (1) est constituée d'une matière plastique modifiée avec des lubrifiants solides.

12. Bague d'étranglement (1) selon l'une des revendications précédentes, dans laquelle la surface de roulement (2) est pourvue, au moins dans la zone de la surface (9) pouvant être mise en contact avec une tige de piston (14) du compresseur à piston, d'une couche de protection contre l'usure, en particulier d'une couche de carbone de type diamant.

13. Dispositif d'étanchéité de tige de piston (10) pour assurer l'étanchéité d'une tige de piston (14) oscillante, montée mobile longitudinalement, d'un compresseur à piston, en particulier d'un compresseur à piston fonctionnant à sec, le dispositif d'étanchéité de tige de piston (10) comprenant au moins un bague d'étranglement (1) selon l'une des revendications 1 à 12, ainsi qu'au moins un élément d'étanchéité (13) monté en aval de la bague d'étranglement.

14. Compresseur à piston fonctionnant à sec comprenant un dispositif d'étanchéité de tige de piston (10) selon la revendication 13.

15. Procédé de compression de gaz d'ébullition produit lors du stockage de gaz naturel liquéfié (GNL), en particulier sur un navire pouvant être propulsé par du GNL, le procédé comprenant les étapes consistant à :
- Fournir au moins un compresseur à piston fonctionnant à sec selon la revendication 14;
- compression du gaz d'ébullition en une ou plusieurs étapes;
- alimentation au moins partielle d'un moteur polycarbu-rant, en particulier d'un moteur de navire dual-fuel, avec le gaz d'ébullition comprimé comme carburant et/ou liquéfaction au moins partielle du gaz d'ébullition;
l'augmentation de pression obtenue par la compression en une ou plusieurs étapes étant d'au moins 200 bars, de préférence d'au moins 250 bars.
